# EUROPÄISCHE PATENTSCHRIFT

(11) **EP 3 040 259 B1**
(45) Veröffentlichungstag und Bekanntmachung des Hinweises auf die Patenterteilung: **05.06.2019**
(21) Anmeldenummer: 14200708.7
(22) Anmeldetag: 31.12.2014
(51) Int. Cl.: B62K 25/02

(54) **Spannvorrichtung**
Clamping device
Dispositif de tension

(43) Veröffentlichungstag der Anmeldung: 06.07.2016
(73) Patentinhaber: Achenbach, Martin, 2504 Biel (CH)
(72) Erfinder: Achenbach, Martin, 2504 Biel (CH)
(74) Vertreter: BOVARD AG

(56) Entgegenhaltungen:
- EP-A2- 2 123 549

## Beschreibung

### Technisches Gebiet der Erfindung

Die vorliegende Erfindung betrifft eine Spannvorrichtung, insbesondere für zumindest teilweise muskelkraftbetriebene Fahrzeuge. Die vorliegende Erfindung betrifft ausserdem ein Verfahren zum Befestigen einer Radeinheit mittels einer solchen Spannvorrichtung.

### Stand der Technik

Zum vereinfachten Wechseln oder Ändern der Position von Fahrzeugkomponenten werden heutzutage schnelllösbare Spannvorrichtungen eingesetzt.

Im Nachfolgenden wird die Ausführung zum schnellen Wechseln von Laufrädern beschrieben. Gleichwohl kann die beschriebene Erfindung auch zum schnellen Trennen und Wiederverbinden von weiteren Fahrwerks- oder Karosserie-/Verkleidungsteilen oder Baugruppen verwandt werden.

Im Radbereich kommt es z.B. während Sportveranstaltungen besonders darauf an, dass eventuell defekte Bauteile möglichst schnell gewechselt werden können.

Auch der Hobbyfahrer schätzt den schnellen Aus- und Einbau z.B. der Laufräder, um so den Transport oder die Aufbewahrung zu vereinfachen.

Gleichzeitig ist ein wichtiger Aspekt, dass die benutzte Spannvorrichtung ein möglichst geringes Gewicht aufweist sowie vorhandene Bau- oder Bedienelemente möglichst wenig auf vorhandene Fahrwerkelemente auftragen, um ein Verfangen mit Hindernissen z.B. beim Einsatz im Gelände zu vermeiden.

Darüber hinaus ist anzustreben, dass eine zufällige Beschädigung wie Umfallen oder Sturz nicht zu einer derartigen Beschädigung führt, dass das nachträgliche Bedienen der Vorrichtung verunmöglicht wird.

In den letzten Jahren setzten sich zur Befestigung z.B. der Laufräder zunehmend Schraubverbindungen durch, bei denen die Spannvorrichtung durch eine Öffnung in einem ersten Aufnahmeelement auf einer ersten Seite des Laufrades durch die Radnabe zu einem mit einem Aufnahmegewinde versehenen zweiten Aufnahmeelement auf einer zweiten Seite des Laufrades eingeführt wird. Über das Einschrauben und Anziehen der Spannvorrichtung wird eine sichere Verspannung der Radnabe zwischen den beiden Aufnahmeelementen gewährleistet.

Zum Einen finden sich hier Lösungen, bei denen lediglich eine Schraubachse Verwendung findet, die an dem dem Gewinde gegenüberliegenden Ende mit eine Werkzeugaufnahme versehen ist.

Die WO 2013/149868 A1 offenbart z.B. eine Lösung, bei der das zur Werkzeugaufnahme passende Werkzeug , z.B. ein Inbusschlüssel, in der der Aufnahmeseite gegenüberliegenden Seite untergebracht werden kann. Somit braucht der Fahrer das geeignete Werkzeug nicht in seiner Bekleidung mitführen.

Eine andere mögliche Lösung offenbart die DE 29714945 U1, bei der statt des Werkzeugs ein abnehmbarer, im eingesteckten Zustand formschlüssiger Hebel Verwendung findet. Nachteilig auch an dieser Lösung ist, dass der Fahrer nie der Zweifel verlässt, ob er das passende Werkzeug/Hebel nicht doch gerade verlegt oder verloren hat.

Die erfindungsgemässe Spannvorrichtung besitzt daher einen handbetätigbaren Hebel, welcher bei bestimmungsgemässem Gebrauch zum dauerhaften Verbleib an der Spannvorrichtung vorgesehen ist. Ähnliche Lösungen sind ebenfalls schon aus der Praxis bekannt.

So besitzt z.B. die US 8770610 B2 einen ausklappbaren Hebel, welcher über eine fest mit der Spannachse verbundene Schwenkachse verbunden ist. Dadurch, dass die Winkelposition des Hebels relativ zur Längsachse der Schraubachse fest vorgegeben ist, entsteht der unvorteilhafte Zustand der nicht vorhersagbaren und möglicherweise für die Betätigung unvorteilhaften Position des Hebels. Zudem ist die Länge des Hebels und damit die Höhe der einleitbaren Handkräfte durch die gewünschte vollständige Integration in den Achskopf im eingeklappten Zustand unvorteilhaft eingeschränkt.

Um die Problematik der fehlenden Vorhersagbarkeit der Endposition nach dem Anziehen zu vermeiden bzw. den Hebel in eine Position zu bringen, in denen eine Betätigung am besten möglich ist, wurden Systeme entwickelt, welche eine winklige Ausrichtung des Hebels unabhängig von der Drehposition der Spannachse ermöglichen.

Die EP 1801005 B1 offenbart hier z.B. einen handbetätigbaren Hebel, welcher durch axiale Bewegung weg von der Radmitte von einem mit der Schraubachse formschlüssigen Verbindung in eine 2.Position gebracht werden kann, in der eine freie Drehbewegung und damit Positionierung des Hebels möglich wird. Durch einen Anschlag wird ein vollständiges Abziehen des Hebels von der Schraubachse verhindert, der Hebel bleibt somit in dauerhafter Verbindung mit der Achse. Nachteilig an dieser Lösung ist der durch die Führung des Hebels bedingte axiale Platzbedarf, das Ende der gesamten Spannvorrichtung steht relativ weit ab und ist somit für externe Beschädigungen wie z.B. Stürze deutlich exponiert.

Weitere bekannte Ausführungsformen stellen die EP 2070725 B1, sowie US 5494390 und WO 2008/145496 A2 dar. Hier ist der handbedienbare Hebel über eine Art Ratschenmechanismus mit der Spannachse verbunden. Da sich in dieser Konstruktion die Betätigungsebene des Hebels relativ zur Spannachse bei der Benutzung nicht ändert, muss der Hebel somit für akzeptable Umgreifbarkeit mit der Hand relativ weit von der entsprechenden Fahrwerkskomponente beabstandet sein.

Noch eine weitere Ausführungsform der schnellen Radbefestigung findet sich in der US 7562942 B2. Hier verbleibt der handbetätigbare Hebel am Laufrad, die sichere Fixierung im Fahrwerk wird durch axiales Spreizen der Konstruktion im Fahrwerk relativ zu einer Halteachse mit fester Länge hergestellt. Diese Konstruktion, bei der beim Ausbau der Hebel am Laufrad verbleibt, weist unter anderem den Nachteil auf, dass im Fahrwerk geschlitzte statt geschlossener Ausfallenden genutzt werden müssen, welche in Bezug auf Stabilität und vor Allem des unbeabsichtigten Herausfallens des Laufrads bei unsachgemässer Montage oder durch das Bremsmoment eingeleiteter Kräfte z.B. durch Scheibenbremsen Nachteile aufweisen.

Die US 251985 offenbart einen handbetätigbaren Hebel, welcher durch Bewegen in einer im Wesentlichen lotrechten Ebene zur Spannachse des Rades von einer Position, in der ein Formschluss in Rotationsrichtung der Achse besteht hin zu einer 2.Position, in der kein Formschluss in Rotationsrichtung der Achse besteht. Nachteilig ist hierbei das Existieren von nur zwei Kraftübertragungspositionen sowie der durch die fehlende Veränderbarkeit der Distanz zwischen Hebel und Fahrwerkskomponente notwendige weite Auskragen des Hebels um eine ausreichende Greifbarkeit zu gewährleisten.

Aus EP 2 123 549 A2, welche die Präambel offenbart, ist eine Achse zur lösbaren Befestigung eines Rads mit einer hebelbetriebenen Nockenanordnung bekannt, wobei der Hebel zwischen einer offenen und einer geschlossenen Position innerhalb eines begrenzten Drehbereichs drehbar ist. Durch Drehung des Hebels erfolgt eine axiale Verschiebung und damit eine Veränderung der Spannkraft. Nachteilig ist hier der vergrösserte Bauaufwand durch ein zusätzliches Zwischenelement zwischen Spannachse und Spannkopf, welches nicht nur Zug- sondern zusätzlich auch Torsionskräfte übertragen muss und dadurch eine Fertigung aus hochfesten und somit schweren Werkstoffen bedingt.

### Zusammenfassung der Erfindung

Ziel der vorliegenden Erfindung ist somit, einen Aufbau zu offenbaren, welcher die Nachteile des oben genannten Stands der Technik eliminiert. Besonders ist das Ziel der vorliegenden Erfindung, eine Spannvorrichtung vorzuschlagen, welche ein einfaches und sicheres Wechseln bzw. Ändern der Position von Fahrzeugkomponenten ermöglicht sowie ein Verfahren zum Befestigen einer Radeinheit an entsprechenden Aufnahmen mittels einer solchen Spannvorrichtung.

Dies wird insbesondere erreicht durch die Spannvorrichtung gemäss dem unabhängigen Patentanspruch 1 und das Verfahren gemäss dem unabhängigen Anspruch 12.

Bevorzugte Ausgestaltungen und Weiterbildungen sind Gegenstand der Unteransprüche und der Beschreibung.

Die erfindungsgemässe Spannvorrichtung wird vorzugsweise als Schnellspannvorichtung zum schnellen Befestigen oder Lösen eines Laufrads eingesetzt.

### Kurzbeschreibung der Zeichnungen

Nachfolgend wird anhand der beigefügten Zeichnungen näher auf Ausführungsbeispiele der Erfindung eingegangen. Es zeigen:
Fig. 1 eine Spannvorrichtung gemäss einem ersten Ausführungsbeispiel der Erfindung;
Fig. 2 die Explosionsdarstellung der Spannvorrichtung von Fig. 1;
Fig. 3 den Schnitt durch das Ausführungsbeispiel der Erfindung gemäss Fig. 1 in einer ersten Position;
Fig. 4 ein Detail von Fig. 3;
Fig. 5 den Schnitt durch das Ausführungsbeispiel der Erfindung gemäss Fig. 1 in einer zweiten Position;
Fig. 6 ein Detail von Fig. 5;
Fig. 7 den Ausschnitt der Spannvorrichtung gemäss Fig. 1 ohne Abdeckung in einer ersten Position;
Fig. 8 den Ausschnitt der Spannvorrichtung gemäss Fig. 1 ohne Abdeckung in einer zweiten Position;
Fig. 9 den Schnitt durch die Spannvorrichtung gemäss Fig. 1 in einer ersten Position;
Fig. 10 den Schnitt durch die Spannvorrichtung gemäss Fig. 1 in einer zweiten Position;
Fig. 11 die Ansicht eines Ausführungsbeispiels in Achsrichtung der Spannvorrichtung;
Fig. 12 den aussermittigen Schnitt durch die Spannvorrichtung von Fig.11;
Fig. 13 ein Detail des Schnitts von Fig. 12;
Fig. 14 eine Spannvorrichtung gemäss einem zweiten Ausführungsbeispiel der vorliegenden Erfindung;
Fig. 15 die Explosionsdarstellung der Spannvorrichtung von Fig. 14;
Fig. 16 den Schnitt durch das Ausführungsbeispiel der Erfindung gemäss Fig. 14 in einer ersten Position;
Fig. 17 den Schnitt durch das Ausführungsbeispiel der Erfindung gemäss Fig. 14 in einer zweiten Position;
Fig. 18 eine Spannvorrichtung gemäss einem dritten Ausführungsbeispiel der vorliegenden Erfindung, ohne Abdeckung, in einer ersten Position;
Fig. 19 ein Detail von Fig. 18 in Seitenansicht;
Fig. 20 die Spannvorrichtung gemäss Fig. 18 in einer zweiten Position;
Fig.21 ein Detail von Fig. 20 in Seitenansicht;
Fig. 22 die Explosionsdarstellung der Spannvorrichtung von Fig. 18;
Fig. 23 die Spannvorrichtung gemäss Fig. 18 in einer Aufsicht mit Darstellung einer Schnittebene;
Fig. 24 einen Schnitt durch die Schnittebene aus Fig. 23 in einer ersten Position;
Fig. 25 ein Detail aus Fig. 24;
Fig. 26 einen Schnitt durch die Schnittebene aus Fig. 23 in einer zweiten Position;
Fig. 27 ein Detail aus Fig. 26;
Fig. 28 die Spannvorrichtung gemäss Fig. 18 in einer Aufsicht mit Darstellung einer Schnittebene;
Fig. 29 einen Schnitt durch die Schnittebene aus Fig. 28 in einer ersten Position;
Fig. 30 eine Spannvorrichtung gemäss einem vierten Ausführungsbeispiel der vorliegenden Erfindung;
Fig. 31 die Explosionsdarstellung der Spannvorrichtung von Fig. 30;
Fig. 32 den Schnitt durch das Ausführungsbeispiel der Erfindung gemäss Fig. 30 in einer ersten Position;
Fig. 33 ein Detail von Fig. 32;
Fig. 34 den Schnitt durch das Ausführungsbeispiel der Erfindung gemäss Fig. 30 in einer zweiten Position;
Fig. 35 ein Detail von Fig. 34;
Fig. 36 die Seitenansicht eines Ausführungsbeispiels der Erfindung gemäss Fig. 30 in einer ersten Position;
Fig. 37 die Seitenansicht eines Ausführungsbeispiels der Erfindung gemäss Fig. 30 in einer zweiten Position;
Fig. 38 einen ersten Schnitt durch das Ausführungsbeispiel der Erfindung gemäss Fig. 30 in einer ersten Position;
Fig. 39 einen zweiten Schnitt durch das Ausführungsbeispiel der Erfindung gemäss Fig. 30 in einer ersten Position;
Fig. 40 einen ersten Schnitt durch das Ausführungsbeispiel der Erfindung gemäss Fig. 30 in einer zweiten Position;
Fig. 41 einen zweiten Schnitt durch das Ausführungsbeispiel der Erfindung gemäss Fig. 30 in einer zweiten Position;
Fig. 42 eine perspektivische Darstellung einer Radaufhängung mit mittels erfindungsgemässer Spannvorrichtung eingebautem Laufrad;
Fig. 43 eine Seitenansicht einer Radaufhängung mit mittels erfindungsgemässer Spannvorrichtung eingebautem Laufrad;
Fig. 44 den Schnitt durch eine Radaufhängung mit mittels einer erfindungsgemässen Spannvorrichtung eingebautem Laufrad; und
Fig. 45 den Schnitt durch eine Radaufhängung mit mittels einer weiteren erfindungsgemässen Vorrichtung eingebautem Laufrad.

### Detaillierte Beschreibung der Erfindung

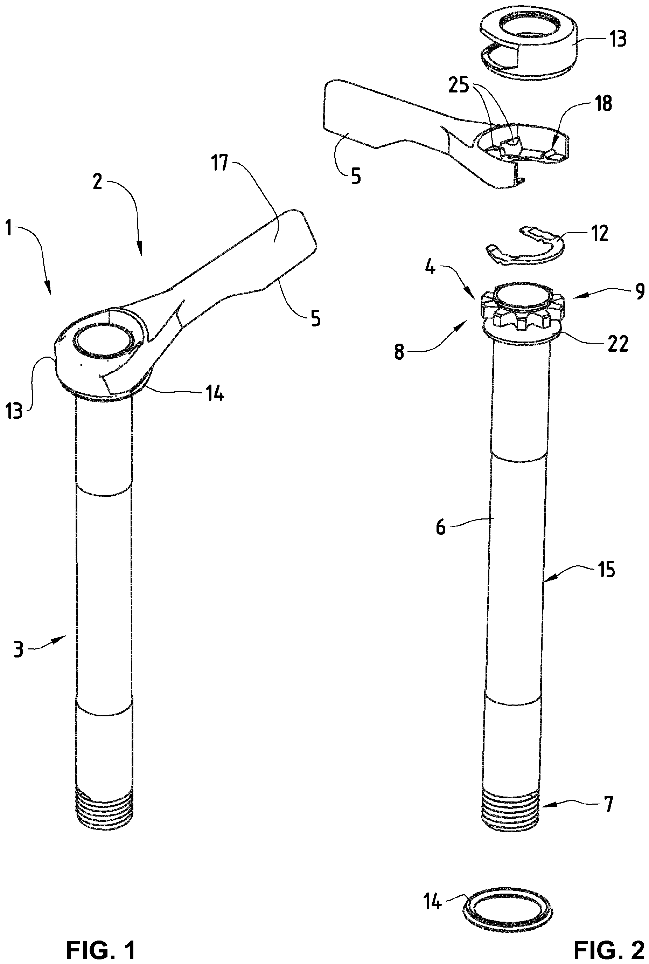

Figur 1 zeigt eine erfindungsgemässe Spannvorrichtung 1 gemäss der ersten Ausführungsform der Erfindung in einer perspektivischen Ansicht. Diese Spannvorrichtung besteht im Wesentlichen aus einer Zugeinheit 3 und einer mit der Zugeinheit 3 im Bereich des zweiten Endes der Zugeinheit 8 verbundenen Hebeleinheit 2. Die Zugeinheit 3 besteht ihrerseits aus einem im Wesentlichen zylindrischen Zugelement 6, welches im Bereich des ersten Endes 7 des Zugelements 6 mit einer dazu passenden Aufnahme am Fahrwerk (nicht dargestellt) formschlüssig verbunden werden kann. Wie in Figur 1 illustriert, kann diese Aufnahme beispielsweise als Aussengewinde ausgeformt sein. Es sind aber auch weitere, auf Rotation basierende Verbindungsarten, wie z.B. Innengewinde, Bajonett-Verschluss, o.ä. möglich und bevorzugt.

Zur Gewichtsreduktion kann die Zugeinheit hohl ausgeformt sein und/oder aus besonders leichten Materialien wie Aluminium, Magnesium, Titan oder faserverstärktem Kunststoff bestehen.

Die Hebeleinheit 2 umfasst hier auch einen handbetätigbaren Hebel 5. Zur Gewichtsreduktion der Einheit kann auch dieser Hebel aus besonders leichten Materialien wie Aluminium, Magnesium, Titan oder faserverstärktem Kunststoff bestehen.

Zur sicheren Fixierung der Spannvorrichtung 1 am Gegenstück kann im Bereich des zweiten Endes der Spannvorrichtung 8 eine Rändelscheibe 14 angebracht sein.

Bevorzugt sind Zugelement 6 und Formabschnitt 4 mehrteilig aufgebaut. Besonders bevorzugt sind Zugelement 6 und Formabschnitt 4 einteilig aufgebaut.

Figur 2 zeigt die erfindungsgemässe Spannvorrichtung 1 aus Figur 1 als Explosionsdarstellung. An der Hebeleinheit 2 befindet sich mindestens ein Krafteinleitungselement 25 zur formschlüssigen Kraftübertragung. Ebenso befindet sich hier wenigstens ein Hinterschnitt 18, welcher in Zusammenwirken mit dem federnden Element 12 ein unbeabsichtigtes Entfernen der Hebeleinheit 2 von der Zugeinheit verhindert. Das federnde Element 12 dient ferner dazu, die Hebeleinheit axial gegen den Auflagebereich 22 zu spannen. Im Bereich des zweiten Endes 8 der Spannvorrichtung 1 befindet sich ein Formabschnitt 4, an dem mindestens ein Eingriffsabschnitt 9 ausgeformt ist, welcher in wenigstens einer Position 10, 11 der Hebeleinheit 2 die formschlüssige Kraftüberragung zwischen Hebeleinheit 2 und Zugeinheit 3 in Rotationsrichtung um die Längsachse des Zugelements 6 durch Ineinandergreifen des mindestens einen Eingriffsabschnitts 9 und des mindestens einen Kraftübertragungselements 25 ermöglicht. Zum Schutz vor Umwelteinflüssen ist im Bereich des zweiten Endes der Spannvorrichtung 8 eine flexible Abdeckung 13 vorgesehen. Der Innendurchmesser 16 im Bereich des ersten Endes 7 des Zugelements 6 kann geringer sein als in anderen Bereichen wie z.B. dem des zweiten Endes 8 der Spannvorrichtung 1. Ebenfalls angedacht und bevorzugt ist aber auch, dass die Hebeleinheit 2 in der Ruheposition von der Spannvorrichtung abgenommen werden kann, ohne die Vorspannung der Vorrichtung zu verändern, um z.B. ein unberechtigtes Lösen der Spannvorrichtung zu verhindern.

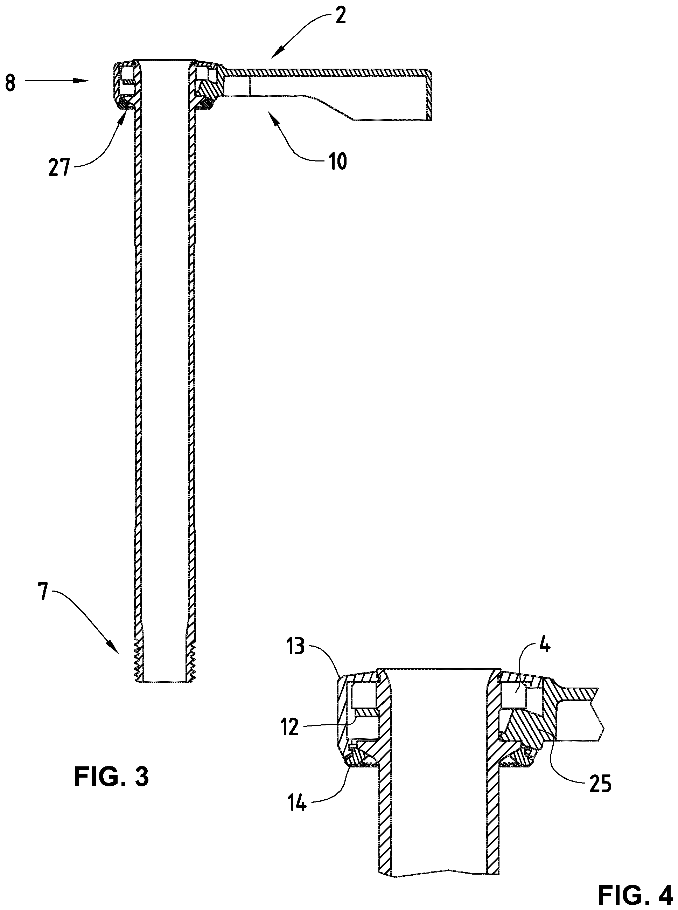

Figur 3 zeigt einen Schnitt entlang der Längsachse des Zugelements 6 durch die Spannvorrichtung gemäss Figur 1. Die Hebeleinheit 2 befindet sich hier in einer möglichen Ruhelage 10, in der im Wesentlichen kein Drehmoment in Rotationsrichtung um die Längsachse des Zugelements 6 eingebracht werden kann, welches zum funktionsgemässen Befestigen oder Lösen der Spannvorrichtung 1 ausreicht. Der Hebel befindet sich dabei in Ruhelage näher zur Mittelebene in Fahrtrichtung des Fahrzeugs als in Aktivlage.

Figur 4 zeigt einen Detailausschnitt von Figur 3. Durch Höhenversatz von Formabschnitt 4 und Kraftübertragungselement 25 kann die Hebeleinheit 2 relativ zur Zugeinheit 3 um die Längsachse des Zugelements 6 gedreht werden, da hierbei im Wesentlichen kein zur Veränderung der Vorspannung der Spannvorrichtung 1 notwendiges Drehmoment übertragen wird. In Ruhelage 10 kann der Hebel 5 somit in eine Position gebracht werden, der sich für die Benutzung des Gesamtfahrzeugs als am wenigsten behindernd ergibt, ohne dass z.B. die axiale Spannkraft der Zugeinheit hierdurch variiert wird.

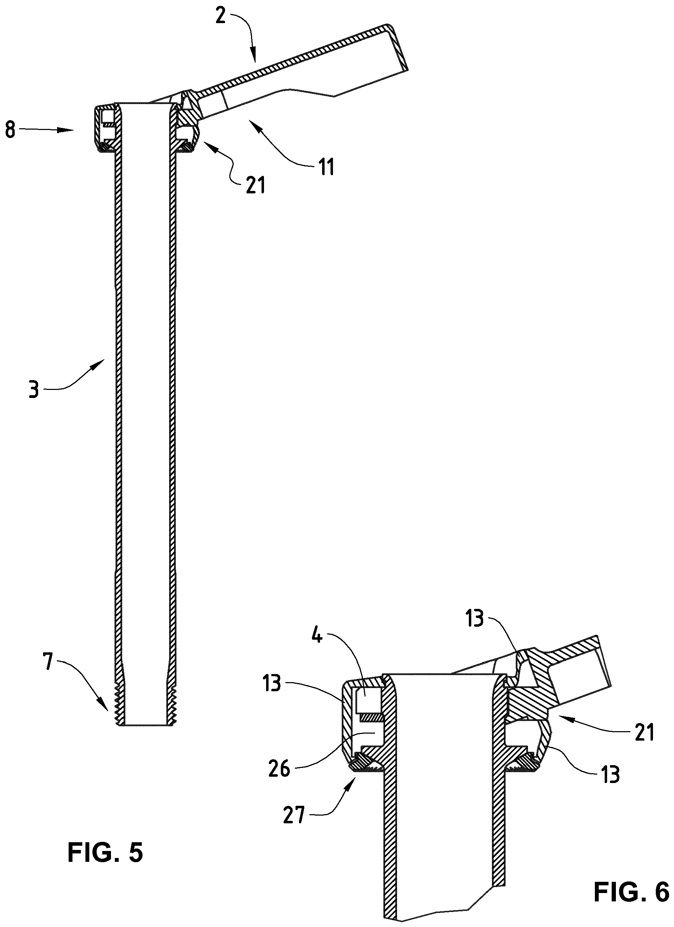

Figur 5 zeigt einen Schnitt analog Figur 3, bei dem der Hebel 5 bzw. die Hebeleinheit 2 durch eine Schwenkbewegung in eine Aktivlage 11 gebracht wurde. In der Aktivlage 11 besteht zumindest teilweise ein Formschluss 21 in Rotationsrichtung um die Längsachse des Zugelements 6. Hierdurch kann in bevorzugter Weise durch z.B. manuelle Krafteinwirkung auf die Hebeleinheit 2 ein Befestigen oder Lösen der Spannvorrichtung 1 bewirkt werden.

In einer bevorzugten Ausführungsform ist der Winkel der Schwenkbewegung auf weniger als 100° beschränkt. In einer besonders bevorzugten Ausführungsform ist der Winkel der Schwenkbewegung auf weniger als 35° beschränkt. In einer weiteren bevorzugten Ausführungsform verharrt der Hebel nach dem Schwenken in der Aktivlage.

Figur 6 zeigt einen Detailausschnitt von Figur 5. Hier greift das Kraftübertragungselement 25 formschlüssig in den Formabschnitt 4 ein. Aufgrund ihrer elastischen Eigenschaften behält die Abdeckung 13 auch in der Aktivlage 11 der Spannvorrichtung 1 ihre Schutzfunktion bei.

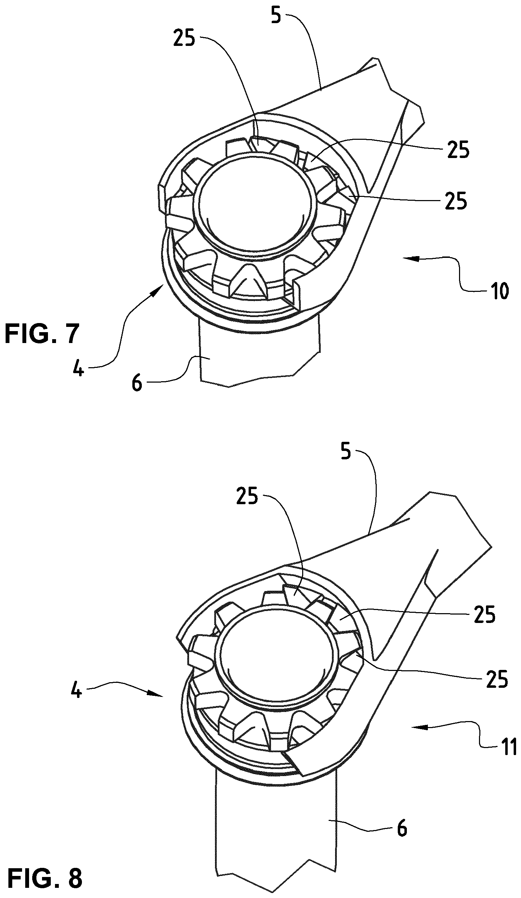

Figur 7 zeigt eine perspektivische Detailabbildung der erfindungsgemässen Spannvorrichtung 1 in einer Ruhelage 10. Hierbei sind Formabschnitt 4 und Kraftübertragungselemente 25 nicht im Eingriff miteinander.

Figur 8 zeigt eine perspektivische Detailabbildung der erfindungsgemässen Spannvorrichtung 1 in einer Aktivlage 11. Hierbei sind Formabschnitt 4 und Kraftübertragungselemente 25 im Eingriff miteinander.

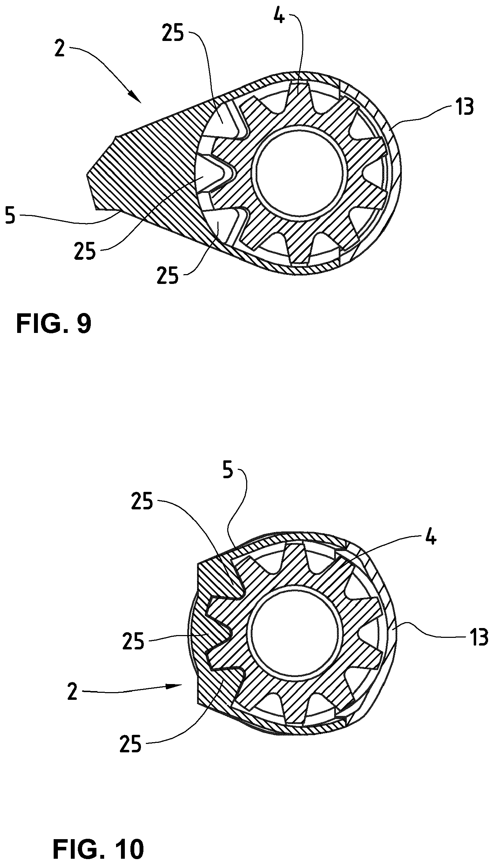

Figur 9 zeigt einen Schnitt durch den Formabschnitt 4 in einer Ebene lotrecht zur Rotationsachse des Zugelements 6 in Ruhelage 10 der Spannvorrichtung 1.

Figur 10 zeigt den Schnitt durch dieselbe Ebene wie in Figur 9, sobald die Hebeleinheit 2 in eine geeignete Aktivlage 11 gebracht wurde.

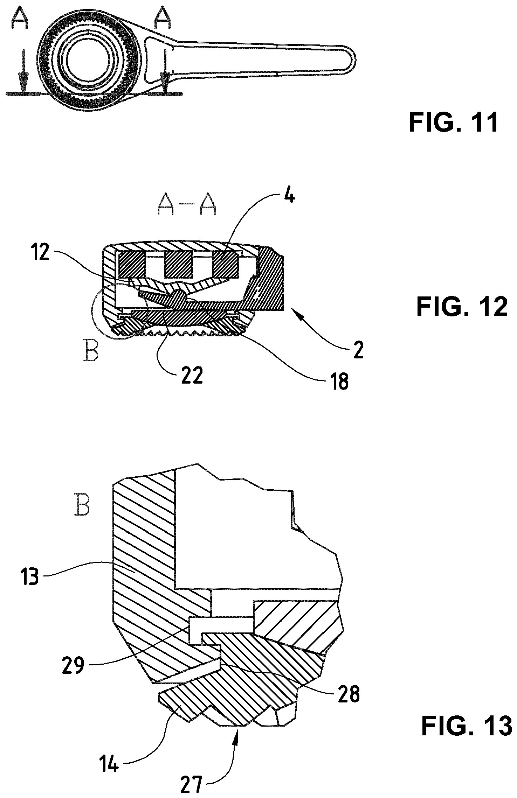

Figur 11 die Untersicht der Spannvorrichtung 1 gemäss Figur 1.

Figur 12 zeigt den aussermittigen Schnitt durch die Spannvorrichtung 1. Die Hebeleinheit 2 wird durch das federnde Element 12 gegen den Auflagebereich 22 gespannt. Der Hinterschnitt 18 an der Hebeleinheit 2 verhindert das unbeabsichtigte Trennen von Hebeleinheit 2 und Zugeinheit 3.

Figur 13 zeigt ein Detail von Figur 12. Durch einen Hinterschnitt 29 der Abdeckung 13, welche in einen Hinterschnitt 28 der Rändelscheibe 14 eingreift, definiert die Abdeckung 13 die axiale Position der Rändelscheibe 14 in Richtung der Rotationsachse des Zugelements 6.

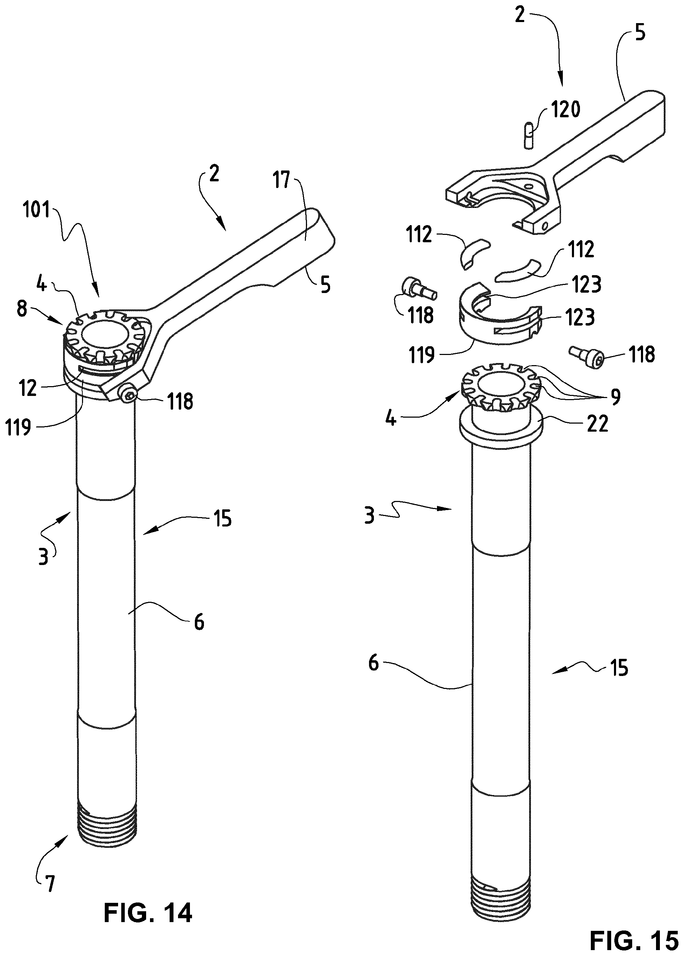

Figur 14 zeigt eine erfindungsgemässe Spannvorrichtung 101 gemäss einer zweiten Ausführungsform der Erfindung in einer perspektivischen Ansicht. Diese Spannvorrichtung 101 entspricht im Wesentlichen der Spannvorrichtung 1 aus den Figuren 1 bis 10, mit der Ausnahme der fehlenden Abdeckung 13.

Figur 15 zeigt die erfindungsgemässe Spannvorrichtung 101 aus Figur 14 als Explosionsdarstellung. Abweichend von Figur 2 und vom ersten Ausführungsbeispiel der Erfindung sind hier zwei separate Verstiftungen 118 vorgesehen, welche das unbeabsichtigte radiale Entfernen der Hebeleinheit 2 von der Zugeinheit 3 verhindern. Die axiale Verspannung der Hebeleinheit 2 auf den Auflagebereich 22 wird durch federnde Elemente 112 erreicht, welche in passende Aufnahmebereiche 123 in der Bügelvorrichtung 119 eingesetzt werden.

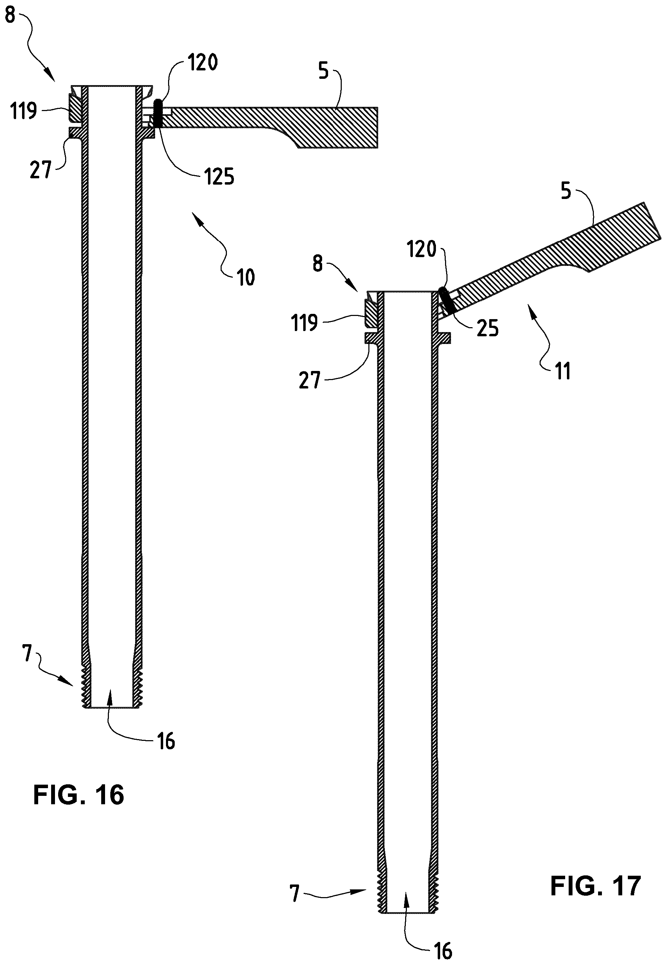

Die Figuren 16 und 17 zeigen den Schnitt durch die Ruhelage 10 bzw. Aktivlage 11 der erfindungsgemässen Spannvorrichtung 101 analog den Figuren 3 bzw. 5. Das Kraftübertragungselement 125 ist hier als Stift 120 ausgeführt, welcher als separates Bauteil mit dem Hebel 5 verbunden wird.

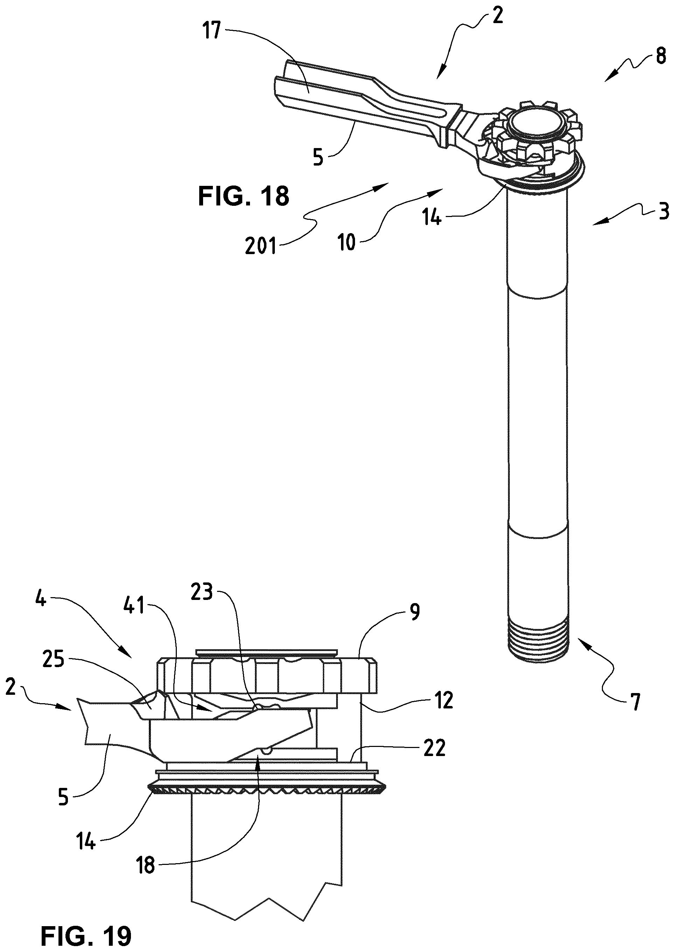

Figur 18 zeigt eine erfindungsgemässe Spannvorrichtung 201 gemäss einer dritten Ausführungsform der Erfindung in einer perspektivischen Ansicht. Diese Spannvorrichtung 201 entspricht im Wesentlichen der Spannvorrichtung 1 aus den Figuren 1 bis 10, hier ohne die vorgesehene Abdeckung 13 dargestellt. Das federnde Element 12 ist in dieser Ausführungsform dahingehend erweitert, dass Abschnitte des federnden Elements 12 auch Führungsfunktionen der Hebeleinheit 2 in axialer und radialer Richtung der Zugeinheit 3 übernehmen können. Im vorliegenden Ausführungsbeispiel ist das federnde Element einteilig ausgebildet. Es ist jedoch angedacht und bevorzugt, das Element 12 mehrteilig aufzubauen und die mehreren Einzelteile den Unterfunktionen zuzuordnen. In dieser besonders bevorzugten Ausführungsform verharrt der Hebel nach dem Schwenken in der Ruhe- und/oder in der Aktivlage. Die bleibende Positionierung in beiden genannten Positionen kann vorzugsweise durch das wenigstens eine federnde Element 12 erreicht werden, welche im Wesentlichen den dauerhaften Kontakt in axialer Richtung mit der Zugeinheit gewährleistet.

In einer weiteren bevorzugten Ausführungsform existiert eine Vielzahl von möglichen Positionen, in denen ein Formschluss zwischen Formabschnitt und Hebeleinheit besteht.

Figur 19 zeigt die erfindungsgemässe Spannvorrichtung 201 aus Figur 18 als Detail der Seitenansicht. Das federnde Element 12 integriert in dieser Ausführungsform auch die Funktionen des Hinterschnitts 18 zum Verhindern des unbeabsichtigten Trennens der Hebeleinheit 2 und der Zugeinheit 3. Zur Verbesserung der Federnden Eigenschaften kann zwischen oberem und unterem Bereich der Federnden Einheit 12 über einen gewissen Abschnitt ein Spalt 41 vorhanden sein. Das Federnde Element 12 besitzt zudem Ausformungen zur Positionierung des Rastelements 23, welches sich an der Hebeleinheit 2 befindet

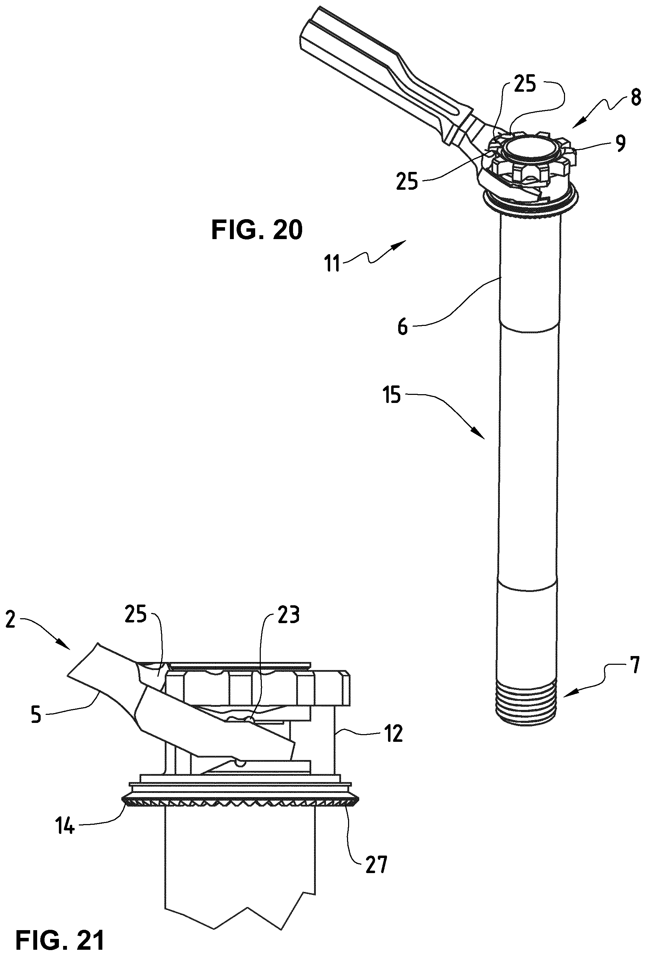

Figur 20 zeigt die erfindungsgemässe Spannvorrichtung 201 aus Figur 18 in einer perspektivischen Darstellung in Aktivlage 11, ebenfalls ohne vorgesehene Abdeckung 13. Die Kraftübertragungselemente 25 befinden sich hier in formschlüssigen Eingriff mit dem Eingriffsabschnitt 9.

Figur 21 zeigt die erfindungsgemässe Spannvorrichtung 201 aus Figur 20 als Detail der Seitenansicht. Das Rastelement 23 befindet sich hierbei in einer von der Figur 19 abweichenden Ausformung des federnden Elements 12.

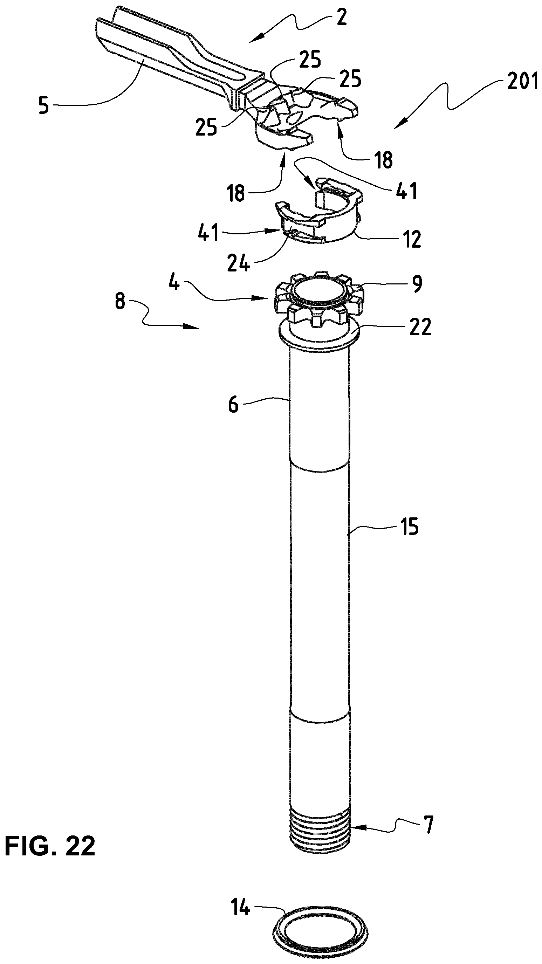

Figur 22 zeigt die erfindungsgemässe Spannvorrichtung 201 aus Figur 18 als Explosionsdarstellung. Abweichend von der ersten Ausführungsform besitzt das federnde Element 12 hier auch noch radial zur Zugeinheit 3 befindliche Übertragungsflächen 24, welche die spezifischen radialen Flächenbelastungen zwischen Hebeleinheit 2 und Zugeinheit 3 minimieren. Zur Öffnung des federnden Elements hin sind Spalte 41 zu erkennen, welche einen vergrösserten Federweg des federnden Elements 12 ermöglichen.

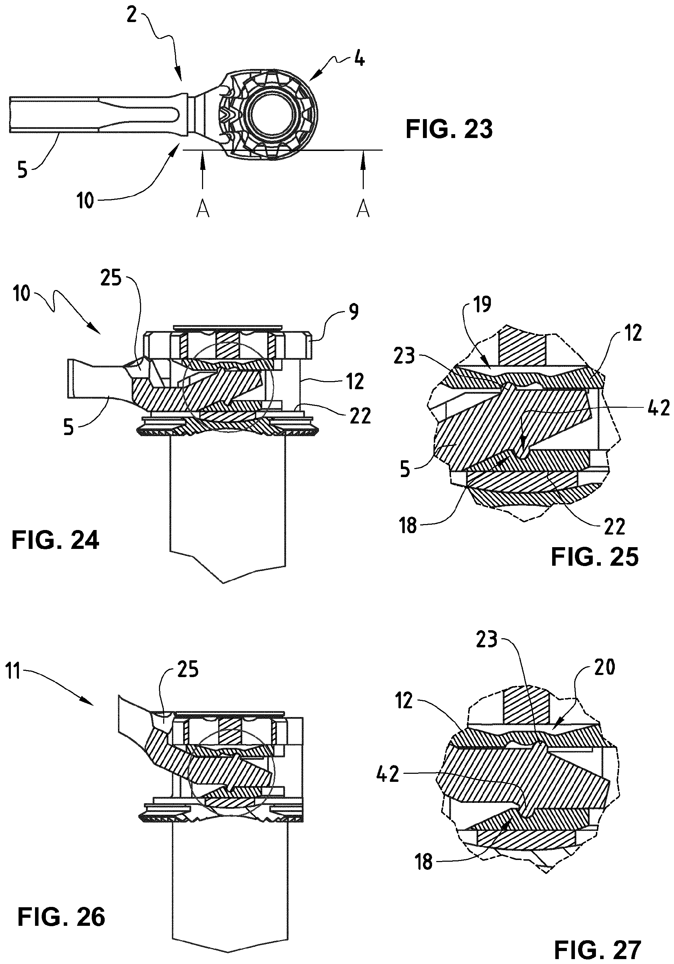

Figur 23 zeigt eine Aufsicht der erfindungsgemässen Ausführungsform aus Figur 18 mit eingezeichneter Schnittebene in Ruheposition 10.

Figur 24 zeigt den Schnitt durch die Schnittebene aus Figur 23. Das Federnde Element 12 hat hier gleichzeitig gleitende Funktionen zwischen Eingriffsabschnitt 9 und Auflageabschnitt 22.

Figur 25 zeigt eine Detaildarstellung von Figur 24. Das Rastelement 23 befindet sich hierbei in der ersten Einrastposition 19 in Kontakt mit dem federnden Element 12. Das Federnde Element 12 erzeugt durch seine axiale Vorspannung zwischen Hebeleinheit 12 und Zugeinheit 3 eine klare Indexierung der zumindest zwei Positionen Ruhelage 10 und Aktivlage 11. Die beiden Einrastpositionen 19, 20 befinden sich in dieser Ausführungsform relativ zum Hinterschnitt 25 oder der Schwenkachse 42 näher am zweiten Ende 8 der Spannvorrichtung 1. Es ist jedoch angedacht und auch bevorzugt, dass der Hinterschnitt 18 und/oder die Schwenkachse 42 relativ zu den Einrastpositionen 19, 20 des Rastelements 23 näher am zweien Ende 8 der Spannvorrichtung 1 befinden.

Figur 26 zeigt den Schnitt durch die Schnittebene aus Figur 23, wobei sich die Hebeleinheit 2 bzw. der Hebel 5 in der Aktivlage 11 befinden. Hier befindet sich das Rastelement in der zweiten Einrastposition 20 des federnden Elements 12.

Figur 27 zeigt eine Detaildarstellung von Figur 26. Oberhalb der Einrastposition 20 ist der Freiraum und somit der mögliche Federweg des federnden Elements 12 erkennbar.

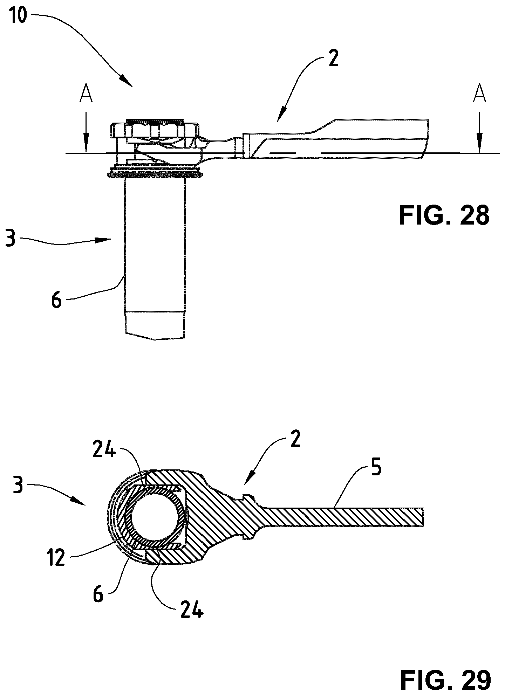

Figur 28 zeigt eine Seitenansicht der erfindungsgemässen Ausführungsform aus Figur 18 mit eingezeichneter Schnittebene in Ruheposition 10.

Figur 29 zeigt einen Schnitt durch die Schnittebene aus Figur 28. Das federnde Element 12 ist hier so ausgeformt, dass sich eine grosse Übertragungsfläche 24 zwischen Hebeleinheit 2/Hebel 5 und Zugeinheit 3/-Zugelement 6 bildet, welche bei Aufbringen der Spann- oder Lösekraft der Spannverbindung die spezifische Flächenbelastung auf die einzelnen Elemente verringert.

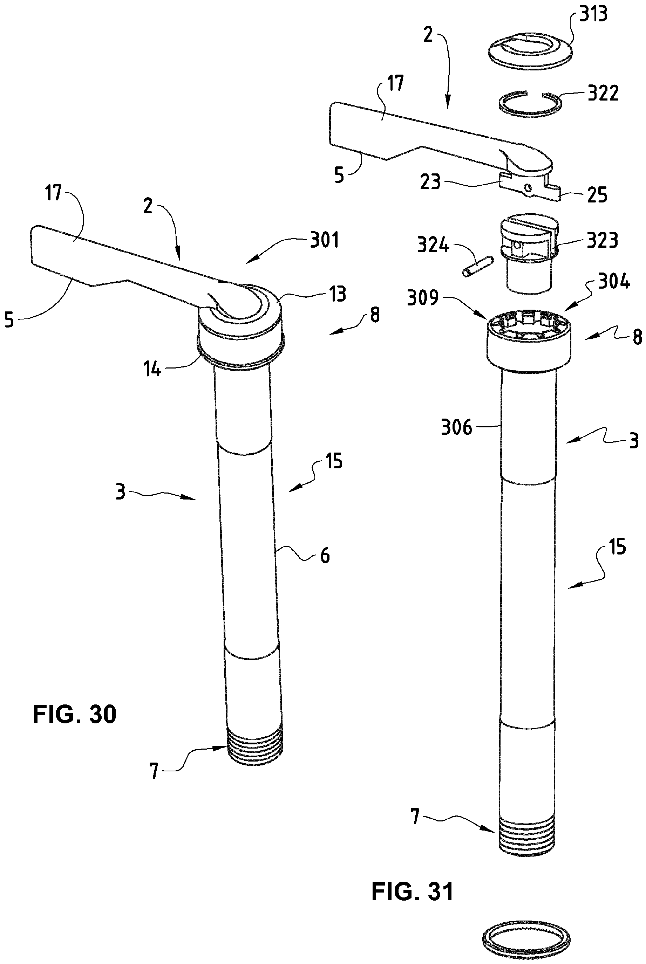

Figur 30 zeigt eine erfindungsgemässe Spannvorrichtung 301 gemäss einer vierten Ausführungsform der Erfindung in einer perspektivischen Ansicht. Diese Spannvorrichtung 301 entspricht im Wesentlichen der Spannvorrichtung 1 aus den Figuren 1 bis 10, mit Ausnahme der Ausrichtung des mindestens einen Wirkabschnitts 309, welche auf die Rotationsachse des Zugelements 6 hin geöffnet sind, statt von dieser weg. Ausserdem befindet sich das mindestens eine Kraftübertragungselement 325 radial zur besagten Rotationsachse innen relativ zum Formabschnitt 304.

Figur 31 zeigt die erfindungsgemässe Spannvorrichtung 301 aus Figur 30 als Explosionsdarstellung. Die Zugeinheit 3 ist im Bereich des zweiten Endes 8 dabei so ausgeformt, dass sie als Gehäuseabschnitt eine Schutzfunktion der weiteren mechanischen Elemente übernimmt. Abweichend zu Figur 2 ist ein zusätzliches Führungselement 323 vorhanden, welches über eine Achse 324 die Schwenkbewegung des Hebels 5 bzw. der Hebeleinheit 5 von einer Ruhelage 10 in eine Aktivlage 11 ermöglicht. Zur axialen Sicherung der Hebeleinheit 2 gegen unbeabsichtigtes Herausziehen aus der Zugeinheit 3 ist ein Sicherungselement 322 vorgesehen.

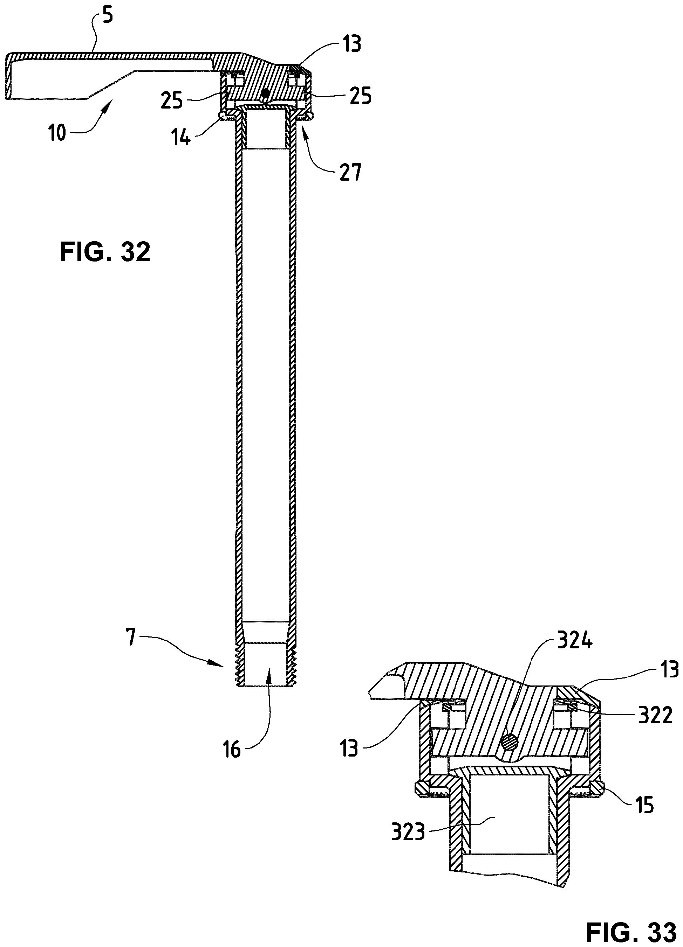

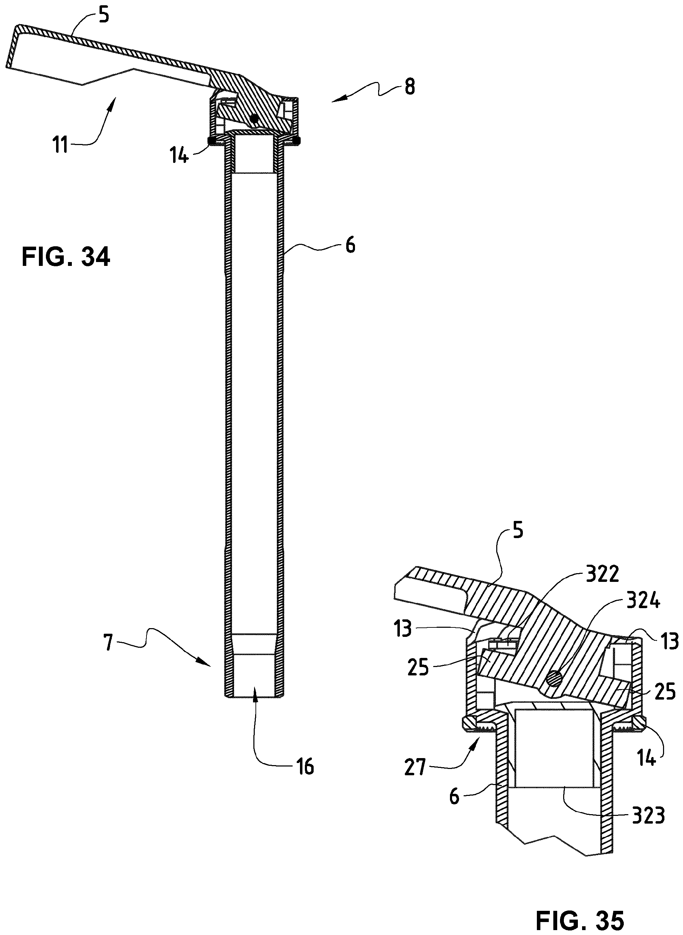

Die Figuren 32 bis 35 zeigen den Schnitt durch die Ruhelage 10 bzw. Aktivlage 11 der erfindungsgemässen Spannvorrichtung 301 analog den Figuren 3 bis 6. In Ruhelage 10 erfolgt auch hier kein Eingriff der Kraftübertragungselemente 25 in die entsprechende Eingriffsabschnitte 309, welche sich in dieser Ausführungsform in Axialer Richtung des Zugelements 306 sowohl oberhalb als auch unterhalb der Kraftübertragungselemente 25 befinden können, die Hebeleinheit 2 bleibt relativ zur Spanneinheit 3 auch hier im Wesentlichen frei drehbar.

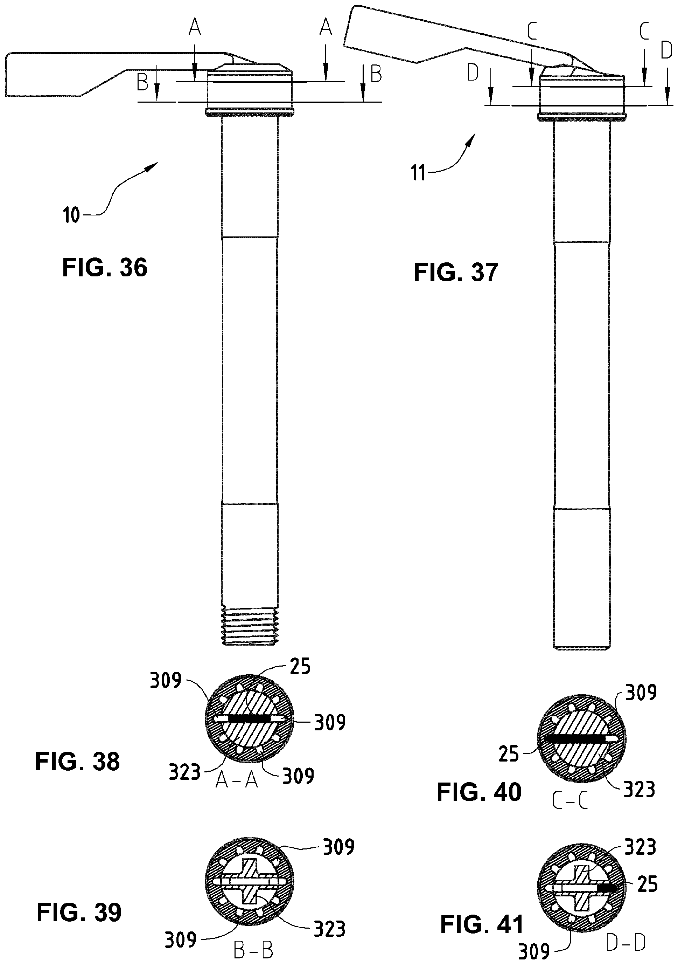

Die Figuren 36 und 37 zeigen eine Seitenansicht der erfindungsgemässen Spannvorrichtung 301 in einer Ruheposition 10 bzw. Aktivposition 11.

Die Figuren 38 und 39 zeigen Schnitte durch die erfindungsgemässe Ausführungsform der Spannvorrichtung 301 in Ruhelage 10. Die Schnitte legen hierbei jeweils oberhalb und unterhalb des Bereichs der Kraftübertragungselemente 25 in Ruhelage 10 der Spannvorrichtung 301. Im Wesentlichen findet sich hier kein Formschluss zwischen einem Eingriffsabschnitt 309 und einem Kraftübertragungselement 25 statt.

Die Figuren 40 und 41 zeigen Schnitte durch die erfindungsgemässe Ausführungsform der Spannvorrichtung 301 in Aktivlage 11. Die Schnitte legen hierbei analog zu den Ebenen der Figuren 38 und 39. Sowohl im oberen wie auch im unteren Bereich des Formabschnitts 304 findet hier Formschluss zwischen mindestens einem Eingriffsabschnitt 309 und mindestens einem Kraftübertragungselement 25 statt.

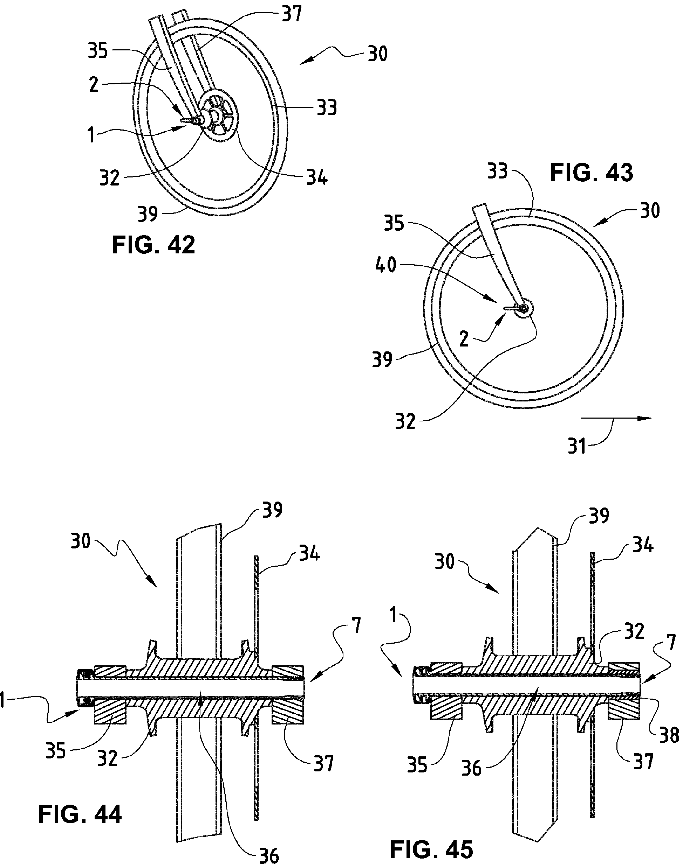

Die Figur 42 zeigt in perspektivischer Darstellung ein mittels erfindungsgemässer Spannvorrichtung 1 in einer Radaufnahme 35, 37 befestigte Radeinheit 30.

Die Radeinheit 30 besteht hier aus einem Nabenabschnitt 32, einem Felgenabschnitt 33, einem Reifen 39, sowie Verbindungen zwischen dem Nabenabschnitt 32 und dem Felgenabschnitt 33. In vorliegender Abbildung findet sich auch eine Bremsscheibe 34. Zur festen Verspannung der Radeinheit 30 wird die Hebeleinheit 2 der Spannvorrichtung 1 in Aktivlage 11 gebracht. Anschliessend wird die Spannvorrichtung 1 mit dem ersten Ende 7 durch die erste Aufnahme 35, das Nabenabschnittsinnere 36, sowie in die zweite Aufnahme 37 eingeführt. Durch Rotation der Spannvorrichtung 1 um die Längsachse der Zugeinheit 3 mittels der Hebeleinheit 2 wird eine feste Verspannung von Radeinheit 30 und der ersten und zweiten Aufnahme 35, 37 erzielt. Abschliessend wird die Hebeleinheit 2 in Ruhelage 10 geschwenkt und durch Rotation um die Längsachse der Zugeinheit 3 in eine bevorzugte Endlage 40 gebracht ohne dass im Wesentlichen die Vorspannkraft der Spannvorrichtung dabei verändert wird.

Die Figur 43 zeigt die Seitenansicht eines mittels erfindungsgemässer Spannvorrichtung 1 in einer Radaufnahme 35, 37 befestigte Radeinheit 30. Die Hebeleinheit wurde hierbei in Ruhlage 10 so in eine Endlage 40 gebracht, dass sich bei Bewegung des Fahrzeugs mit eingebauter Radeinheit 30 in Fahrtrichtung 31 ein möglichst geringer Widerstand gegen äussere Einflüsse, wie z.B. Ästen oder einem möglichst geringen Luftwiderstand, ergibt.

Die Figur 44 zeigt einen Längsschnitt durch die erfindungsgemässe Spannvorrichtung 1 in eingebautem Zustand. Das Laufrad 30 gemäss Figur 42 wurde mittels der Spanneinheit 1 zwischen der ersten Aufnahme 35 und der zweiten Aufnahme 37 verspannt.

Figur 45 zeigt einen weiteren Längsschnitt durch die erfindungsgemässe Spannvorrichtung 1 in einem weiteren eingebauten Zustand. Abweichend von Figur 44 ist die Spannvorrichtung hier nicht direkt mit der zweiten Aufnahme 37, sondern mit einem Einsatz 38 verbunden, welcher an der zweiten Aufnahme 37 befestigt ist.

Die Erfindung ist auf eine Verwirklichung im Sinne der oben stehenden Beschreibung von verschiedenen Ausführungsbeispiel nicht eingeschränkt. Zahlreiche Änderungen, Zusätze und Weiterbildungen sind im Rahmen des Beanspruchten ohne weiteres möglich. So ist zum Beispiel, abgesehen von den erwähnten Beispielen, keinerlei Einschränkung in der Wahl der Werkstoffe gegeben. Zudem ist es klar, dass, selbst wenn die Beschreibung vor allem auf die Ausführungsform der Erfindung zum schnellen Wechseln von Laufrädern (z.B. bei Fahrrädern) ausgerichtet ist, die vorliegende Erfindung auch zum schnellen Trennen und Wiederverbinden von irgendwelchen beliebigen Fahrwerks- oder Karosserie-/Verkleidungsteilen oder Baugruppen (z.B. bei Fahrrädern, Motorrädern, Kraftfahrzeugen, Lastwägen o.ä.) eingesetzt werden.

### Bezugszeichenliste

- 1: Spannvorrichtung
- 2: Hebeleinheit
- 3: Zugeinheit
- 4: Formabschnitt
- 5: Hebel
- 6: Zugelement
- 7: Erstes Ende der Spannvorrichtung
- 8: Zweites Ende der Spannvorrichtung
- 9: Eingriffsabschnitt
- 10: Ruhelage
- 11: Aktivlage
- 12: federndes Element
- 13: Abdeckung
- 14: Rändelscheibe
- 15: Bereich des reduzierten Aussendurchmessers

- 16: Innendurchmesser
- 17: Griffbereich
- 18: Hinterschnitt
- 19: Erste Einrastposition
- 20: Zweite Einrastposition
- 21: Formschluss
- 22: Auflagebereich
- 23: Rastelement
- 24: Übertragungsfläche
- 25: Kraftübertragungselement
- 26: Innenbereich
- 27: Auflagebereich
- 28: Hinterschnitt in Rändelscheibe
- 29: Hinterschnitt in Abdeckung
- 30: Radeinheit
- 31: Fahrtrichtung
- 32: Nabenabschnitt
- 33: Felgenabschnitt
- 34: Bremsscheibe
- 35: Erste Aufnahme
- 36: Nabenabschnittsinneres
- 37: Zweite Aufnahme
- 38: Einsatz
- 39: Reifen
- 40: Endlage
- 41: Spalt
- 42: Schwenkachse
- 101: Spannvorrichtung
- 112: federndes Element
- 118: Verstiftung
- 119: Bügelvorrichtung
- 120: Stift
- 123: Aufnahmebereich
- 125: Kraftübertragungselement
- 201: Spannvorrichtung
- 301: Spannvorrichtung
- 304: Formabschnitt
- 306: Zugelement
- 309: Eingriffsabschnitt
- 313: Abdeckung
- 322: Sicherungselement
- 323: Führungselement
- 324: Achse

## Patentansprüche

1. Spannvorrichtung (1), mit
einer sich in axialer Richtung erstreckenden Zugeinheit (3), bestehend zumindest aus einem Zugelement (6) sowie einem Formabschnitt (4), und
einer Hebeleinheit (2), bestehend zumindest aus zumindest einem Hebel (5) und zumindest einem Kraftübertragungselement (25),
wobei der zumindest eine Hebel (5) zum Aufbringen einer Spannkraft durch Winkelbewegung um die Längsachse der Zugeinheit (3) geeignet ist und die Spannkraft im Bereich eines zweiten Endes der Spannvorrichtung (8) über zumindest einen Auflagebereich (27) übertragen wird,
wobei die Hebeleinheit (2) durch eine Schwenkbewegung von zumindest einer Ruhelage (10) in zumindest eine Aktivlage (11) gebracht werden kann, wobei die Schwenkachse und die Längsachse der Zugeinheit (3) einen Winkel von mindestens 45° schliessen,
**dadurch gekennzeichnet, dass**.
der Auflagebereich (27) bezogen auf die Längsachse der Zugeinheit (3) axial unveränderlich zum Zugelement (6) ist, so dass in der zumindest einen Ruhelage eine Winkelveränderung der Hebeleinheit (2) um die axiale Richtung der Zugeinheit (3) möglich ist, ohne den Spannungszustand der Spannvorrichtung (1) zu verändern.

2. Spannvorrichtung nach Anspruch 1, **dadurch gekennzeichnet, dass** in der zumindest einen Ruhelage (10) im Wesentlichen kein Formschluss in Rotationsrichtung um die Längsachse des Zugelements (6) zwischen der Zugeinheit (3) und der Hebeleinheit (2) besteht, und dass in der zumindest einen Aktivlage (11) im Wesentlichen ein Formschluss zwischen der Zugeinheit (3) und der Hebeleinheit (2) in Rotationsrichtung um die Längsachse des Zugelements (6) besteht.

3. Spannvorrichtung nach einem der vorhergehenden Ansprüche, **dadurch gekennzeichnet, dass** sich im Bereich eines ersten Endes der Spannvorrichtung (7) ein Formelement zur formschlüssigen Verbindung mit einem von der Spannvorrichtung unabhängigen Element befindet.

4. Spannvorrichtung nach Anspruch 3, **dadurch gekennzeichnet, dass** es sich bei der formschlüssigen Verbindung um ein Gewinde handelt.

5. Spannvorrichtung nach einem der vorhergehenden Ansprüche, **dadurch gekennzeichnet, dass** das Zugelement (6) und der Formabschnitt (4) einteilig ausgebildet sind.

6. Spannvorrichtung nach einem der vorhergehenden Ansprüche, **dadurch gekennzeichnet, dass** der Hebel (5) und das Kraftübertragungselement (25) einteilig ausgebildet sind.

7. Spannvorrichtung nach einem der vorhergehenden Ansprüche, **dadurch gekennzeichnet, dass** sich zwischen der Hebeleinheit (2) und der Zugeinheit (3) ein zumindest in axialer Richtung des Zugelements (6) wirkendes federndes Element (12) befindet.

8. Spannvorrichtung nach einem der vorhergehenden Ansprüche, **dadurch gekennzeichnet, dass** Sicherungsvorrichtungen (18, 118, 119, 222) gegen unbeabsichtigtes Trennen von Hebeleinheit (2) und Zugeinheit (3) vorhanden sind.

9. Spannvorrichtung nach einem der vorhergehenden Ansprüche, **dadurch gekennzeichnet, dass** die Hebeleinheit (2) durch Haltevorrichtungen (19, 20) dauerhaft in der wenigstens einen Ruhelage (10) und/oder der wenigstens einen Aktivlage (11) gehalten werden kann.

10. Spannvorrichtung nach einem der vorhergehenden Ansprüche, **dadurch gekennzeichnet, dass** es sich um eine Spannvorrichtung (1) für zumindest teilweise muskelkraftbetriebene Fahrzeuge handelt.

11. Spannvorrichtung nach einem der vorhergehenden Ansprüche, **dadurch gekennzeichnet, dass** es sich um eine Spannvorrichtung (1) zum Spannen einer Radvorrichtung handelt.

12. Verfahren zum Befestigen einer Radeinheit (30) an einer ersten und einer zweiten Aufnahme (35, 37) mittels einer Spannvorrichtung nach einem der vorhergehenden Ansprüche, bestehend aus
a) Einsetzen der Radeinheit (30) zwischen der ersten und der zweiten Aufnahme (35, 37);
b) entweder Bringen der Hebeleinheit (2) der Spannvorrichtung (1) durch Schwenken in Aktivlage (11) und Führen der Spannvorrichtung (1) mit dem ersten Ende (7) durch die erste Aufnahme (35) und das Nabeninnere (36) bis in die zweite Aufnahme (37);
oder Führen der Spannvorrichtung (1) mit dem ersten Ende (7) durch die erste Aufnahme (35) und das Nabeninnere (36) bis in die zweite Aufnahme (37) und Bringen der Hebeleinheit (2) der Spannvorrichtung (1) durch Schwenken in Aktivlage (11);
c) Erzeugen einer Spannkraft zwischen der ersten und der zweiten Aufnahme (35, 37) und dem Nabenabschnitt (32) durch Rotation der Hebeleinheit (2) um die Längsachse der Zugeinheit (3);
d) Bringen der Hebeleinheit (2) der Spannvorrichtung (1) durch Schwenken in Ruhelage (10); und
e) Bringen der Hebeleinheit (2) der Spannvorrichtung (1) durch Rotation um die Längsachse der Zugeinheit (3) in gewünschte Endlage (40), ohne dabei die Vorspannkraft der Spannvorrichtung (1) zu verändern.

## Claims

1. Clamping device (1), with
a tensioning unit (3) extending in axial direction, comprising at least one tension element (6) and a shaped section or formed portion (4), and
a lever unit (2), at least consisting of at least one lever (5) and at least one force transmission element (25),
whereby the at least one lever (5) is suitable for applying a clamping force by angular movement about the longitudinal axis of the tensioning unit (3) and the clamping force in the region of a second end of the clamping device (8) is transmitted over at least one bearing or support area (27),
whereby, through a pivot movement, the lever unit (2) is able to be brought from at least one resting position (10) into at least one active position (11), whereby the pivot axis and the longitudinal axis of the tensioning unit (3) enclose an angle of at least 45°,
**characterized in that**
the bearing or support area (27) relative to the longitudinal axis of the tensioning unit (3) is axially unchangeable with respect to the tension element (6), so that in the at least one resting position an angular change of the lever unit (2) about the axial direction of the tensioning unit (3) is possible without changing the clamping condition of the clamping device (1).

2. Clamping device according to claim 1, **characterized in that** in the at least one resting position (10) there exists substantially no positive locking or form locking between the tensioning unit (3) and the lever unit (2) in rotation direction about the longitudinal axis of the tension element (6), and **in that** in the at least one active position (11) there exists substantially a positive locking or form locking between the tensioning unit (3) and the lever unit (2) in rotation direction about the longitudinal axis of the tension element (6).

3. Clamping device according to one of the preceding claims, **characterized in that** located in the region of a first end of the clamping device (7) is a shaped element for positive locking or form locking connection to an element independent of the clamping device.

4. Clamping device according to claim 3, **characterized in that** the positive locking or form locking connection involves a threading.

5. Clamping device according to one of the preceding claims, **characterized in that** the tension element (6) and the shaped section or formed portion (4) are designed as one piece.

6. Clamping device according to one of the preceding claims, **characterized in that** the lever (5) and the force transmission element (25) are designed as one piece.

7. Clamping device according to one of the preceding claims, **characterized in that** located between the lever unit (2) and the tensioning unit (3) is a spring element (12) effective at least in the axial direction of the tension element (6).

8. Clamping device according to one of the preceding claims, **characterized in that** safety devices (18, 118, 119, 222) against unintentional separation of lever unit (2) and tensioning unit (3) are present.

9. Clamping device according to one of the preceding claims, **characterized in that** by means of holding devices (19, 20) the lever unit (2) is able to be kept in a sustained way in the at least one resting position (10) and/or in the at least one active position (11).

10. Clamping device according to one of the preceding claims, **characterized in that** it is a clamping device (1) for at least in part for human-powered vehicles.

11. Clamping device according to one of the preceding claims, **characterized in that** it is a clamping device (1) for clamping a wheel device.

12. Method for attaching a wheel unit (30) to a first and a second receiver (35, 37) by means of a clamping device according to one of the preceding claims, comprising
a) inserting the wheel unit (30) between the first and second receivers (35, 37);
b) either bringing the lever unit (2) of the clamping device (1) into the active position (11) by pivoting and guiding of the clamping device (1) by the first end (7) through the first receiver (35) and the hub interior (36) into the second receiver (37);
or guiding the clamping device (1) by the first end (7) through the first receiver (35) and the hub interior (36) into the second receiver (37) and bringing the lever unit (2) of the clamping device (1) into the active position (11) by pivoting;
c) generating a clamping force between the first and the second receivers (35, 37) and the hub section (32) by rotation of the lever unit (2) about the longitudinal axis of the tensioning unit (3);
d) bringing the lever unit (2) of the clamping device (1) into resting position (10) by pivoting (10); and
e) bringing the lever unit (2) of the clamping device (1) into the desired end position (40) by rotation about the longitudinal axis of the tensioning unit (3), without thereby changing the pre-tensioning force of the clamping device (1).

## Revendications

1. Dispositif de serrage (1), comportant
un système de tension (3) s'étendant dans une direction axiale, comprenant au moins un élément de tension (6) et une section de forme (4), et
une unité de levier (2), consistant au moins en un levier (5) et en au moins un élément de transmission de force (25),
au moins un levier (5) convenant pour exercer une force de serrage par le biais d'un mouvement angulaire autour de l'axe longitudinal de l'unité de tension (3); la force de serrage, dans la zone d'une deuxième extrémité du dispositif de serrage (8), étant transmise via au moins une zone d'appui (27),
le levier (2) pouvant être entraîné, par un mouvement de pivotement, depuis au moins une position de repos (10) vers au moins une position active (11), l'axe de pivotement et l'axe longitudinal de l'unité de tension (3) formant un angle d'au moins 45°,
**caractérisé en ce que**
la zone d'appui (27) est invariable axialement par rapport à l'élément de tension (6) suivant l'axe longitudinal de l'unité de tension (3), de telle sorte qu'au moins dans la position de repos une variation angulaire du levier (2) autour de la direction axiale de l'unité de tension (3) est possible sans changer l'état de tension du dispositif de serrage (1).

2. Dispositif de serrage selon la revendication 1, **caractérisé en ce que** dans au moins la position de repos (10) il n'existe substantiellement aucun crabotage entre l'unité de tension (3) et le levier (2) dans la direction de la rotation autour de l'axe longitudinal de l'élément de tension (6), et **en ce que** dans au moins la position active (11) il existe substantiellement un crabotage entre l'unité de tension (3) et le levier (2) dans la direction de la rotation autour de l'axe longitudinal de l'élément de tension (6).

3. Dispositif de serrage selon l'une des revendications précédentes, **caractérisé en ce qu'**un élément formé pour le crabotage par connexion à un élément indépendant du dispositif de serrage est situé dans la zone d'une première extrémité du dispositif de serrage (7).

4. Dispositif de serrage selon la revendication 3, **caractérisé en ce que** la connexion par correspondance de forme pour le crabotage est réalisée à l'aide d'un filetage.

5. Dispositif de serrage selon l'une des revendications précédentes, **caractérisé en ce que** l'élément de tension (6) et la section de forme (4) sont conçues d'un seul tenant pour ne former qu'une seule pièce.

6. Dispositif de serrage selon l'une des revendications précédentes, **caractérisé en ce que** le levier (5) et l'élément de transmission de force (25) sont conçus d'un seul tenant pour ne former qu'une seule pièce.

7. Dispositif de serrage selon l'une des revendications précédentes, **caractérisé en ce qu'**un élément de ressort (12) agissant au moins dans la direction axiale de l'élément de tension (6) est situé entre le levier (2) et l'unité de tension (3).

8. Dispositif de serrage selon l'une des revendications précédentes, **caractérisé en ce que** des dispositifs de sécurité (18, 118, 119, 222) sont prévus contre une séparation accidentelle entre le levier (2) et l'unité de tension (3).

9. Dispositif de serrage selon l'une des revendications précédentes, **caractérisé en ce que** le levier (2) peut être retenu durablement au moins dans la position de repos (10) et/ou au moins dans la position active (11) au moyen de dispositifs de maintien (19, 20).

10. Dispositif de serrage selon l'une des revendications précédentes, **caractérisé en ce qu'**il s'agit d'un dispositif de serrage (1) pour des véhicules mus au moins en partie par la force musculaire.

11. Dispositif de serrage selon l'une des revendications précédentes, **caractérisé en ce qu'**il consiste en un dispositif de serrage (1) pour engin roulant.

12. Procédé de fixation d'une roue (30) à une première et une deuxième insertion (35, 37) au moyen d'un dispositif de serrage selon l'une des revendications précédentes, comprenant :
a) l'engagement de la roue (30) entre les première et deuxième insertions (35, 37) ;
b) soit le déplacement du levier (2) du dispositif de serrage (1) pour l'amener dans sa position active (11) par pivotement, et le guidage du dispositif de serrage (1) via la première extrémité (7) dans la première insertion (35), et le moyeu intérieur (36) jusqu'à la deuxième insertion (35, 37);
soit le guidage du dispositif de serrage (1) via la première extrémité (7) à travers la première insertion (35) et le moyeu intérieur (36) jusqu'à la deuxième insertion (37), et le déplacement du levier (2) du dispositif de serrage (1) pour l'amener dans sa position active (11) par pivotement;
c) la génération d'une force de serrage entre les première et deuxième insertions (35, 37), et la partie de moyeu (32) par le biais d'un mouvement de rotation du levier (2) autour de l'axe longitudinal de l'unité de tension (3);
d) le déplacement du levier (2) du dispositif de serrage (1) pour l'amener dans sa position de repos (10) par pivotement (10); et
e) le déplacement du levier (2) du dispositif de serrage (1) dans une position finale désirée (40) suite à une rotation autour de l'axe longitudinal de l'unité de tension (3), sans changer parallèlement la force de pré-tension du dispositif de serrage (1).
